# EUROPEAN PATENT SPECIFICATION

(11) **EP 3 542 994 B1**
(45) Date of publication and mention of the grant of the patent: **18.08.2021**
(21) Application number: 18163600.2
(22) Date of filing: 23.03.2018
(51) Int. Cl.: B29C 64/153, B29C 64/214, B29C 64/393, B33Y 10/00, B33Y 30/00, B33Y 40/00, B33Y 50/02

(54) **DOCTOR BLADE DEVICE**
RAKELVORRICHTUNG
RACLOIR

(43) Date of publication of application: 25.09.2019
(73) Proprietor: United Grinding Group Management AG, 3005 Bern (CH)
(72) Inventor: CLOOTS, Michael, 9008 St. Gallen (CH)
(74) Representative: Maiwald Patent- und Rechtsanwaltsgesellschaft mbH

(56) References cited:
- EP-A1- 3 278 962
- WO-A1-2017/108762
- FR-A1- 3 010 785

## Description

### FIELD OF THE INVENTION

The invention relates to a doctor blade device, an additive manufacturing system, a method for applying a powder material to a substrate by means of a doctor blade, and a manufacturing method for such doctor blade device.

### BACKGROUND OF THE INVENTION

For additive manufacturing, e.g., selective laser melting, the product quality strongly depends on a constant and maximum laser power or laser intensity and/or a stable focal position of the laser also keeping the laser power at maximum. The laser power and/or the focal position of the laser may change, e.g., due to temperature changes in the laser unit and/or in an optical unit of the additive manufacturing system.

EP 3 017 895 A1 discloses a method for producing a component by selective laser melting, wherein a number of lasers arranged next to one another generate a laser field, as a result of which powdery material can be melted in a selective manner for the purposes of generating contours. In the process, individual lasers of the laser arrangement can be switched on or off in a selective matter in order to irradiate or not irradiate certain regions. Furthermore, a device for carrying out the method is provided.

There are conventional additive manufacturing systems in which laser parameters are checked before the actual product manufacturing is started, but these conventional systems can be improved.

EP 3 278 962 A1 discloses a laminating and fabricating control apparatus for correcting a laser irradiation position in correspondence with a shift of the laser irradiation position during laminating and fabricating by an optical fabricating unit. The laminating and fabricating control apparatus includes a position shift acquirer that acquires a shift of an irradiation position of irradiation light on a surface of a squeezing blade when receiving the irradiation light from the irradiator, and an irradiation position corrector that corrects the irradiation position by the irradiator based on the shift of the irradiation position.

FR 3 010 785 A1 discloses a method for monitoring the energy density of a laser beam using parameters of the laser beam including regularly applying the laser beam to a reference substrate and measuring, with each application, the resulting light intensity; identifying a change in the light intensity on the reference substrate between at least two measurements.

WO 2017/108762 A1 discloses a calibration strip having an elongated shape and a cover strip which extends along the longitudinal direction of the strip and which has a plurality of cover openings arranged in a row in the longitudinal direction of the calibration strip. The openings are more permeable to the radiation of the irradiation device than the cover strip region surrounding the cover openings.

### SUMMARY OF THE INVENTION

There may be a need to provide an improved additive manufacturing device, system and method, which allow improving the quality of products manufactured by additive manufacturing.

The problem of the present invention is solved by the subject-matters of the independent claims, wherein further embodiments are incorporated in the dependent claims. It should be noted that the aspects of the invention described in the following apply also to the doctor blade device, the additive manufacturing system, the method for applying a powder material to a substrate by means of a doctor blade and the manufacturing method for such doctor blade device.

According to the present invention, a doctor blade device is presented in claim 1.

The doctor blade device according to the invention allows monitoring the laser unit during the additive manufacturing process and in particular during the application and spreading of a single powder material layer onto the substrate or a previous powder material layer. The monitoring therefore does not require any extra time and is particular precise, because a working plane of the laser unit is by definition parallel to a working plane of the doctor blade body. In addition, a monitoring in the entire working plane of the laser unit is possible. The present doctor blade device further allows adapting and/or correcting laser parameters) of the laser unit during the additive manufacturing process and in particular before a following irradiating or scanning step, in which the powder material spread onto the substrate or the previous powder material layer is hardened by the laser unit. As a consequence, a very early and fast correction of the laser unit can be done on basis of each irradiating or scanning step and not only after the product is finished (potentially with severe continued faults). The detected laser parameter may also allow providing information on the optical system or other parts of the additive manufacturing system, which then can be adapted to improve the additive manufacturing system and method.

As a result, the product quality can be considerably improved, deficient products can be avoided and the overall manufacturing duration as well as the manufacturing and product costs can be reduced.

The doctor blade device according to the invention is suitable for additive manufacturing systems as, e.g., selective laser melting systems. Selective laser melting can be understood in that thin layers of fine metal powder are evenly distributed onto a substrate by means of a doctor blade as coating mechanism, which is fastened to an indexing table that moves in a vertical Z axis. This may take place inside a chamber containing a tightly controlled atmosphere of inert gas at very low oxygen levels. Once the layer has been distributed, the 2D layer or slice of the product may be fused or hardened by selectively melting the powder. This may be accomplished by means of a high-power laser beam directed in X and Y directions. The laser energy shall be configured to permit a melting and welding of the fine metal powder particles to form solid metal. This process shall be repeated layer after layer until the product is complete.

The term "doctor blade" can be understood as doctor knife, spreading knife, squeegee, scraper, wiper, coater, roller or the like. The doctor blade body and the doctor blade element are part of a doctor blade unit, which can be understood as any kind of coating mechanism suitable to spread or distribute a material on a substrate. The term "substrate" can be understood as the substrate as such or as a previous powder material layer. The doctor blade unit and in particular the doctor blade element may be further suitable to remove excess material from the substrate. The doctor blade element is held or supported by the doctor blade body and extends at least partially along the doctor blade body. The doctor blade body and the doctor blade element may be moveable relative to a fixed powder bed in the doctor blade device. The doctor blade body and the doctor blade element comprise two or more components.

The laser unit may be configured to irradiate the measuring unit. This irradiation may lead to a measurement of a parameter of the laser unit. The laser unit may also be configured to irradiate the powder material spread onto the substrate or previous powder material layer. This irradiation or scanning may lead to a melting or welding of the powder material particles into a solid material block. The laser unit may be configured to irradiate the measuring unit and the spread powder material at the same time or subsequently.

The measuring unit is configured for an interaction with the laser unit. This interaction can be understood as a detection or a measurement of a parameter or property of the laser unit and in particular as a detection of a parameter or property of a (focused) laser beam generated by the laser unit. The measuring unit may be beam analyzer, a power meter, a photodiode or any other kind of device for measuring a laser parameter. It can also be a device measuring a temperature and processing the temperature into a power.

The laser parameter may be a laser power, a focal position of the laser in a working plane of the doctor blade device, a focus diameter of a focal spot, a scan speed of the laser beam, a pulse frequency and/or the like.

The detection of such laser parameter can be done while the measuring unit together with the doctor blade body and the doctor blade element move along the substrate or previous powder material layer. The detection of such laser parameter can be done while the laser unit irradiates the powder material spread onto the substrate or previous powder material layer. This can be achieved in that one part of the laser beam is directed to the powder material and another part of the laser beam is directed to the measuring unit. For example, a beam splitter can be used. The detection of the laser parameter can also be done before and/or after the laser unit irradiates the powder material spread onto the substrate or previous powder material layer.

There are several options to implement the measuring unit and the interaction between the laser unit and the measuring unit.

In an example, the measuring unit comprises a sensor element configured to detect a laser parameter of the laser unit. The laser unit may be configured to irradiate the sensor element. The laser parameter may be power data, focal position data or the like of the laser. In an example, the sensor element comprises only one sensor. This single sensor can be moveable relative to and at least partially along the doctor blade body. In another example, the sensor element comprises at least two sensors, which are arranged spaced apart from each other at the doctor blade body. Both allow detecting laser parameters at different positions in a direction along a longitudinal direction of the doctor blade body.

Arranging the sensor element detecting the laser parameter at the doctor blade body, as described above, allows an easy and compact design of the measuring unit. Another option is to separate the measuring unit into several components arranged at different locations, so that weight and volume of the moving components can be reduced. In such example, the measuring unit comprises a reflector element configured to reflect an irritation of the laser unit to a detector element. The laser unit may be configured to irradiate the reflector element. The reflector element is arranged at the moveable doctor blade body, while the detector element may be arranged outside the doctor blade body and in particular fixed relative to the doctor blade body. The detector element may be configured to detect the laser parameter of the laser unit and in particular the laser power, the focal position or the like. In other words, only the reflector element, e.g. one or more mirrors, may be arranged at the moveable doctor blade body, while the detector element actually detecting the laser parameter is fixed e.g. to the selective laser melting chamber.

Another implementation of the measuring device is a plate element to be scratched or burned by the laser unit to provide information on the laser unit. The laser unit may be configured to irradiate the plate element. In such example, the measuring unit comprises the plate element configured to be scratched by the laser unit at least once, while the doctor blade device further comprises a camera element configured to capture an image of the at least one scratch in the plate element. The camera element may be an On-Axis-Camera. In an example, the plate element comprises an anodized portion to be scratched by the laser unit. The anodized portion can be understood to comprise an oxide layer on the surface, which is provided with an increased thickness by means of an electrolytic passivation process when compared to a natural thickness of such oxide layer

In an example, the laser unit may apply a scratch pattern to the plate element. The scratch pattern may be a row or series of scratches or burn marks. The series of scratches may be aligned or have a stepwise configuration. The scratch pattern may also be a wave or the like. A good uniformity and quality of the scratch pattern may correlate to a constant and maximal laser power or laser intensity and/or a stable focal position also keeping the laser power at maximum.

In this example, the doctor blade device may further comprise a processing element configured to process the image of the at least one scratch into detected power data and/or focal position data of the laser unit. The processing element may also be configured to process the plane of the scratch in the plate element into the plane of the layer to be applied by the doctor blade element.

In this example, the doctor blade device may further comprise a comparison element configured to compare the detected power data and/or focal position data of the laser unit to reference data.

In an example, the doctor blade device further comprises a control element configured to control a power and/or focal position of the laser unit based on the detected power and/or focal position data of the laser unit. The control element may also be configured to control a power and/or focal position of the laser unit based on a comparison of the detected power and/or focal position data of the laser unit and reference data from, e.g., a database. In an example, the control element is configured for a continuous control during the manufacture of a work piece.

According to the present invention, also an additive manufacturing system for applying a powder material to a substrate is presented. The additive manufacturing system comprises the doctor blade device as described above and a laser unit. The laser unit is configured to irradiate the powder material spread onto the substrate by means of a doctor blade element of the doctor blade device. This irritation or scanning of the laser unit may lead to a melting or welding of the powder material particles into a solid material block. The laser unit may also be configured to irradiate a measuring unit of the doctor blade device.

The additive manufacturing system according to the invention allows that the laser unit and in particular a laser beam and/or a laser parameter of the laser unit can be checked during or shortly after the application and spreading of the powder material onto the substrate. Such monitoring during the layer application allows controlling and adapting the laser unit on basis of the monitored laser parameter during the spreading of the powder material or at least after the application of a single powder material layer and therefore on a layer-per-layer basis. In other words, the laser unit can be checked during or shortly after a first irradiating or scanning step, in which the powder material spread onto the substrate is hardened by means of the laser beam generated by the laser unit, and before a following second irradiating step, which then can be improved. As a result, the laser unit can be controlled to generate a particular laser power or laser intensity and/or a particular focal position of the laser in a working plane of the doctor blade device.

The doctor blade device or system may further comprise a trigger unit configured to trigger the measuring unit and to trigger a measuring of the interaction between the measuring unit and the laser unit. This means, the interaction between the measuring unit and the laser unit can be done in case the trigger unit triggers it, e.g., in case of a failure analyze, as a routine self-diagnosis or the like.

According to the present invention, also a method for applying a powder material to a substrate by means of a doctor blade is presented in claim 13.

The method for applying a powder material to a substrate by means of a doctor blade according to the invention can be understood as a kind of simulation before, during or after an actual scanning and melting step of the powder material by means of the laser unit, which greatly improves the manufacturing method.

The present method for applying a powder material to a substrate may further comprise an irradiating or scanning of the powder material spread onto the substrate by means of the laser unit.

In an example, the measuring unit comprises a plate element arranged at the doctor blade body and the monitoring step comprises at least a scratching of the plate element by means of the laser unit and a capturing of an image of the scratch in the plate element. In an example, the monitoring step comprises a scratching of a scratch pattern into the plate element. The present method for applying a powder material to a substrate may further comprise a processing of the image of the scratch into power and/or focal position data of the laser unit.

In another example, the measuring unit comprises a sensor element arranged at the doctor blade body and the monitoring step comprises a detecting of power and/or focal position data of the laser unit by means of the sensor element.

In another example, the measuring unit comprises a reflector element arranged at the doctor blade body and reflecting an irritation of the laser unit to a detector element arranged outside the doctor blade body. The monitoring step may then comprise a detecting of power data and/or focal position data of the laser unit by means of the detector element.

The present method for applying a powder material to a substrate may further comprise a controlling of a power and/or a focal position of the laser unit based on the detected power and/or focal position and/or a comparison of the detected power and/or focal position data of the laser unit and reference data.

According to the present invention, also a manufacturing method for a doctor blade device for applying a powder material to a substrate is presented in claim 15.

According to an aspect which is not part of the present invention, also a computer program element is presented, wherein the computer program element comprises program code means for causing the doctor blade device or system as defined in the independent claims to carry out the steps of one of the methods defined in the independent claims when the computer program is run on a computer controlling the doctor blade device or system.

It shall be understood that the doctor blade device, the additive manufacturing system, the method for applying a powder material to a substrate by means of a doctor blade, and the manufacturing method for such doctor blade device according to the independent claims have similar and/or identical preferred embodiments, in particular, as defined in the dependent claims. It shall be understood further that a preferred embodiment of the invention can also be any combination of the dependent claims with the respective independent claim.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the accompanying drawings:
Figure 1 shows schematically and exemplarily an embodiment of an additive manufacturing system and device according to the invention for applying a powder material to a substrate.
Figure 2 shows schematically and exemplarily another embodiment of a doctor blade device according to the invention for applying a powder material to a substrate.
Figure 3 shows schematically and exemplarily another embodiment of a doctor blade device according to the invention for applying a powder material to a substrate.
Figure 4 shows a schematic overview of steps of a method according to the invention for applying a powder material to a substrate by means of a doctor blade.
Figure 5 shows a schematic overview of steps of a manufacturing method according to the invention for a doctor blade device for applying a powder material to a substrate.

### DETAILED DESCRIPTION OF EMBODIMENTS

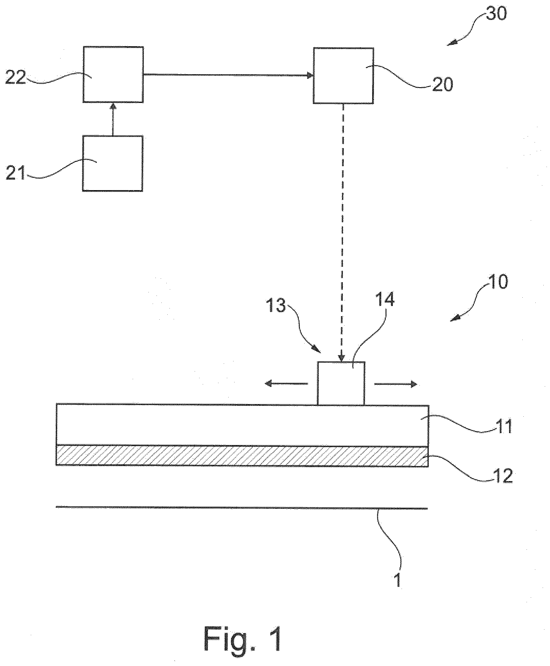

Figures 1 to 3 show schematically and exemplarily different embodiments of an additive manufacturing system 30 and a doctor blade device 10 according to the invention for applying a powder material to a substrate 1. The additive manufacturing system 30 comprises a laser unit 20 and a doctor blade device 10.

The laser unit 20 irradiates the powder material spread onto the substrate 1 by means of a doctor blade element 12 of the doctor blade device 10. The irritation or scanning of the laser unit 20 leads to a melting or welding of the powder material particles into a solid material block. The laser unit 20 also irradiates a measuring unit 13 of the doctor blade device 10. This irradiation of the measuring unit 13 leads to a measurement of a parameter of the laser unit 20. Both irradiations can be done simultaneously or subsequently. The laser parameter may be a laser power, a focal position of the laser in a working plane of the doctor blade device 10 and/or the like.

The doctor blade device 10 comprises a doctor blade body 11, the doctor blade element 12 and the measuring unit 13. The doctor blade body 11 holds the doctor blade element 12 and the doctor blade element 12 extends at least partially along the doctor blade body 11. The doctor blade element 12 spreads the powder material onto the substrate 1. The doctor blade body 11 and the doctor blade element 12 are moveable relative to the substrate 1.

The measuring unit 13 is fixed at the doctor blade body 11 and interacts with the laser unit 20, which irradiate the measuring unit 13 and the powder material spread onto the substrate 1. This interaction is a detection or a measurement of a parameter of a laser beam generated by the laser unit 20.

The doctor blade device 10 and system according to the invention allows that the laser unit 20 and in particular a laser parameter of the laser unit 20 can be checked during or shortly after a first irradiating step and before a following second irradiating step, which then can be improved based on the result of the first irradiating step. Consequently, the laser unit 20 can be controlled to generate an improved laser power or laser intensity and/or a particular focal position of the laser in a working plane of the doctor blade device 10.

The doctor blade device 10 and system according to the invention thereby allows monitoring the laser unit 20 during the additive manufacturing process and therefore the monitoring does not require any extra time. A very early and fast correction of the laser unit 20 can be done on basis of each irradiating step and not only after the product is finished (potentially with faults), As a result, the product quality can be considerably improved and the overall manufacturing duration and cost can be reduced.

There are several options to implement the measuring unit 13 and the interaction between the laser unit 20 and the measuring unit 13.

In the embodiment shown in **Figure 1****,** the measuring unit 13 is a sensor element 14 that detects a laser parameter of the laser unit 20. The detected laser parameter may be a detected laser power and/or a detected focal position of the laser in a working plane of the doctor blade device 10. In this example, the sensor element 14 comprises only one sensor that is moveable relative to and along the doctor blade body 11.

The doctor blade device 10 further comprises a comparison element 21 to compare the detected power and/or focal position of the laser unit 20 to reference data. The doctor blade device 10 further comprises a control element 22 to control a power and/or focal position of the laser unit 20 based on the detected power and/or focal position of the laser unit 20 and/or based on a comparison of the detected power and/or focal position of the laser unit 20 and reference data.

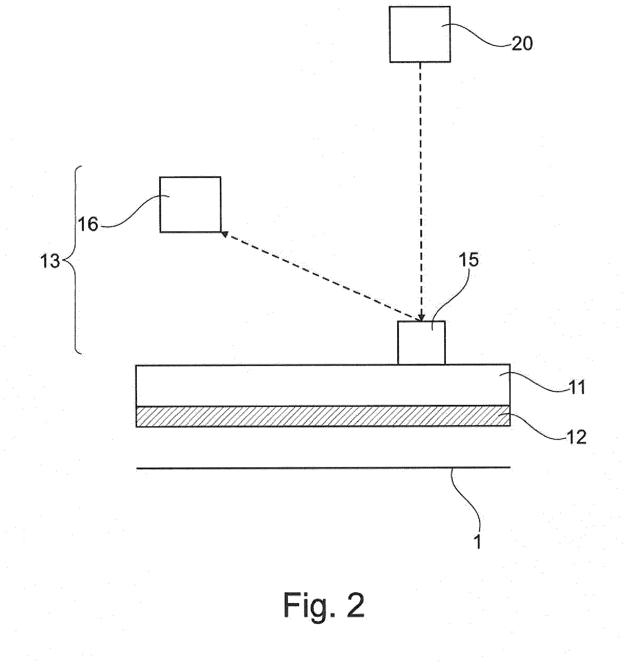

In the embodiment shown in **Figure 2****,** the measuring unit 13 is a moveable reflector element 15 (as e.g. a mirror) arranged at the moveable doctor blade body 11 and reflecting the irritation of the laser unit 20 to a fixed detector element 16 arranged outside the doctor blade body 11 and fixed to, e.g., the selective laser melting chamber. The detector element 16 detects the laser parameter of the laser unit 20 and in particular the laser power, the focal position or the like.

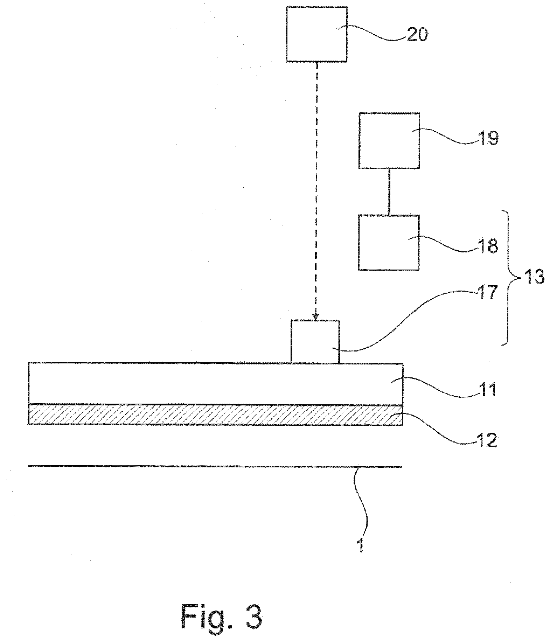

In the embodiment shown in **Figure 3****,** the measuring unit 13 is a plate element 17 to be scratched or burned by the laser unit 20 to provide information on the laser unit 20. The laser unit 20 irradiates the plate element 17 and the doctor blade device 10 further comprises a camera element 18 to capture an image of the scratch in the plate element 17. The doctor blade device 10 further comprises a processing element 19 to process the image of the scratch into detected power data and/or focal position data of the laser unit 20.

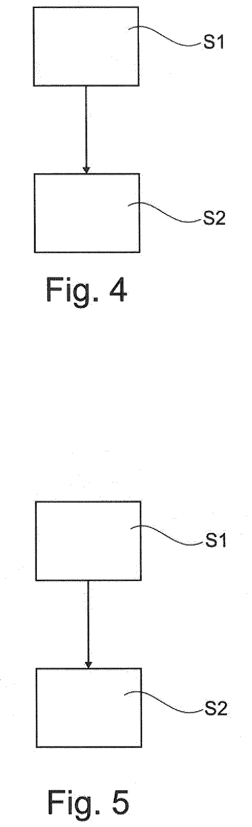

**Figure 4** shows a schematic overview of steps of a method for applying a powder material to a substrate 1 by means of a doctor blade. The method comprises the following steps, not necessarily in this order:
- In a first step S1, spreading the powder material onto the substrate 1 by means of a doctor blade element 12 held by a doctor blade body 11 and extending at least partially along the doctor blade body 11.
- In a second step S2, monitoring an interaction between a measuring unit 13 arranged at the doctor blade body 11 and a laser unit 20 configured to irradiate the powder material spread onto the substrate 1.

The method for applying a powder material to a substrate 1 may further comprise an optional step (not shown) of irradiating the powder material spread onto the substrate 1 by means of the laser unit 20.

The method for applying a powder material to a substrate 1 may further comprise an optional step (not shown) of controlling a power and/or a focal position of the laser unit 20 based on the detected power and/or focal position and/or a comparison of the detected power and/or focal position data of the laser unit 20 and reference data.

**Figure 5** shows a schematic overview of steps of a manufacturing method for a doctor blade device 10 for applying a powder material to a substrate 1. The method comprises the following steps, not necessarily in this order:
- In a first step S1, providing a doctor blade body 11 and a doctor blade element 12.
- In a second step S2, providing a measuring unit 13 at the doctor blade body 11.

The doctor blade body 11 holds the doctor blade element 12 and the doctor blade element 12 extends at least partially along the doctor blade body 11. The doctor blade element 12 spreads the powder material onto the substrate 1. The measuring unit 13 interacts with the laser unit 20, which irradiates the powder material spread onto the substrate 1.

In another exemplary embodiment which is not part of the present invention, a computer program or a computer program element is provided and is adapted to execute the method steps of the methods according to one of the preceding embodiments, on an appropriate system.

The computer program element might therefore be stored on a computer unit, which might also be part of an embodiment which is not part of the present invention. This computing unit may be adapted to perform or induce a performing of the steps of the methods described above. Moreover, it may be adapted to operate the components of the above described apparatus'. The computing unit can be adapted to operate automatically and/or to execute the orders of a user. A computer program may be loaded into a working memory of a data processor. The data processor may thus be equipped to carry out the methods of the invention.

This exemplary embodiment which is not part of the invention covers both, a computer program that right from the beginning uses the invention and a computer program that by means of an up-date turns an existing program into a program that uses the invention.

Further on, the computer program element might be able to provide all necessary steps to fulfil the procedure of an exemplary embodiment of the methods as described above.

According to a further exemplary embodiment which is not part of the present invention, a computer readable medium, such as a CD-ROM, is presented wherein the computer readable medium has a computer program element stored on it, which computer program element is described by the preceding section.

A computer program may be stored and/or distributed on a suitable medium, such as an optical storage medium or a solid state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment which is not part of the present invention, a medium for making a computer program element available for downloading is provided, which computer program element is arranged to perform the methods according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments.

Other variations to the disclosed embodiments can be understood and effected by those skilled in the art in practicing a claimed invention, from a study of the dependent claims.

In the claims, the word "comprising" does not exclude other elements or steps, and the indefinite article "a" or "an" does not exclude a plurality. The mere fact that certain measures are re-cited in mutually different dependent claims does not indicate that a combination of these measures cannot be used to advantage. Any reference signs in the claims should not be construed as limiting the scope.

## Claims

1. A doctor blade device (10) for applying a powder material to a substrate (1) for an additive manufacturing system, comprising:
- a doctor blade body (11),
- a doctor blade element (12), and
- a measuring unit (13),
wherein the doctor blade element (12) is configured to spread the powder material onto the substrate (1),
wherein the doctor blade body (11) holds the doctor blade element (12) and the doctor blade element (12) extends at least partially along the doctor blade body (11),
wherein the measuring unit (13) is arranged at the doctor blade body (11), and
wherein the measuring unit (13) is configured for an interaction with a laser unit (20),
which is configured to irradiate the powder material spread onto the substrate (1), **characterized in that** the doctor blade body (11) and the doctor blade element (12) comprise two or more components.

2. Doctor blade device (10) according to claim 1, wherein the measuring unit (13) comprises a sensor element (14) configured to detect power and/or focal position data of the laser unit (20).

3. Doctor blade device (10) according to the preceding claim, wherein the sensor element (14) comprises only one sensor, which is moveable relative to the doctor blade body (11).

4. Doctor blade device (10) according to claim 2, wherein the sensor element (14) comprises at least two sensors, which are arranged spaced apart from each other at the doctor blade body (11).

5. Doctor blade device (10) according to claim 1, wherein the measuring unit (13) comprises a reflector element (15) configured to reflect an irritation of the laser unit (20) to a detector element (16), wherein the detector element (16) is arranged outside the doctor blade body (11) and is configured to detect power and/or focal position data of the laser unit (20).

6. Doctor blade device (10) according to claim 1, wherein the measuring unit (13) comprises a plate element (17) configured to be scratched by the laser unit (20) at least once and wherein the doctor blade device (10) further comprises a camera element (18) configured to capture an image of the at least one scratch in the plate element (17).

7. Doctor blade device (10) according to the preceding claim, wherein the plate element (17) comprises an anodized portion to be scratched by the laser unit (20).

8. Doctor blade device (10) according to claim 6 or 7, further comprising a processing element (19) configured to process the image of the scratch into detected power and/or focal position data of the laser unit (20).

9. Doctor blade device (10) according to one of the preceding claims, further comprising a comparison element (21) configured to compare the detected power and/or focal position data of the laser unit (20) and reference data.

10. Doctor blade device (10) according to one of the preceding claims, further comprising a control element (22) configured to control a power and/or focal position of the laser unit (20) based on the detected power and/or focal position data of the laser unit (20) and/or the comparison of the detected power and/or focal position data of the laser unit (20) and reference data.

11. Doctor blade device (10) according to the preceding claim, wherein the control element (22) is configured for a continuous control during a manufacture of a work piece.

12. An additive manufacturing system (30) for applying a powder material to a substrate (1), comprising a doctor blade device (10) according to one of the preceding claims and a laser unit (20), wherein the laser unit (20) is configured to irradiate the powder material, which is spread onto the substrate (1) by means of a doctor blade element (12) of the doctor blade device (10).

13. A method for applying a powder material to a substrate (1) by means of a doctor blade for an additive manufacturing system, comprising the following steps:
- spreading the powder material onto the substrate (1) by means of a doctor blade element (12) held by a doctor blade body (11) and extending at least partially along the doctor blade body (11), wherein the doctor blade body (11) and the doctor blade element (12) comprise two or more components, and
- monitoring an interaction between a measuring unit (13) arranged at the doctor blade body (11) and a laser unit (20) configured to irradiate the powder material spread onto the substrate (1).

14. Method according to the preceding claim, wherein the measuring unit (13) comprises a plate element (17) and the monitoring step comprises at least a scratching of the plate element (17) by means of the laser unit (20) and a capturing of an image of the scratch in the plate element (17).

15. A manufacturing method for a doctor blade device (10) for applying a powder material to a substrate (1) for an additive manufacturing system, comprising:
- providing a doctor blade body (11) and a doctor blade element (12), and
- providing a measuring unit (13) at the doctor blade body (11),
wherein the doctor blade body (11) holds the doctor blade element (12), the doctor blade element (12) extends at least partially along the doctor blade body (11), and the doctor blade body (11) and the doctor blade element (12) comprise two or more components,
wherein the doctor blade element (12) is configured to spread the powder material onto the substrate (1), and
wherein the measuring unit (13) is configured for an interaction with a laser unit (20), which is configured to irradiate the powder material spread onto the substrate (1).

## Patentansprüche

1. Eine Rakelvorrichtung (10) zum Auftragen eines Pulvermaterials auf ein Substrat (1) für ein additives Fertigungssystem, umfassend:
- einen Rakelkörper (11),
- ein Rakelelement (12) und
- eine Messeinheit (13),
wobei das Rakelelement (12) ausgebildet ist, um das Pulvermaterial auf das Substrat (1) aufzubringen,
wobei der Rakelkörper (11) das Rakelelement (12) hält und das Rakelelement (12) sich zumindest teilweise entlang des Rakelkörpers (11) erstreckt,
wobei die Messeinheit (13) am Rakelkörper (11) angeordnet ist, und
wobei die Messeinheit (13) für eine Wechselwirkung mit einer Lasereinheit (20) ausgelegt ist, die zum Bestrahlen des auf das Substrat (1) gestreuten Pulvermaterials ausgelegt ist,
**dadurch gekennzeichnet, dass** der Rakelkörper (11) und das Rakelelement (12) zwei oder mehr Komponenten umfassen.

2. Rakelvorrichtung (10) nach Anspruch 1, wobei die Messeinheit (13) ein Sensorelement (14) umfasst, das zur Erfassung von Leistungs- und/oder Fokuspositionsdaten der Lasereinheit (20) ausgebildet ist.

3. Rakelvorrichtung (10) nach dem vorhergehenden Anspruch, wobei das Sensorelement (14) nur einen Sensor aufweist, der relativ zum Rakelkörper (11) bewegbar ist.

4. Rakelvorrichtung (10) nach Anspruch 2, wobei das Sensorelement (14) mindestens zwei Sensoren umfasst, die beabstandet zueinander am Rakelkörper (11) angeordnet sind.

5. Rakelvorrichtung (10) nach Anspruch 1, wobei die Messeinheit (13) ein Reflektorelement (15) umfasst, das ausgebildet ist, um eine Irritation der Lasereinheit (20) auf ein Detektorelement (16) zu reflektieren, wobei das Detektorelement (16) außerhalb des Rakelkörpers (11) angeordnet ist und ausgebildet ist, um Leistungs- und/oder Fokuspositionsdaten der Lasereinheit (20) zu erfassen.

6. Rakelvorrichtung (10) nach Anspruch 1, wobei die Messeinheit (13) ein Plattenelement (17) umfasst, das ausgebildet ist, um von der Lasereinheit (20) mindestens einmal zerkratzt zu werden, und wobei die Rakelvorrichtung (10) ferner ein Kameraelement (18) umfasst, das ausgebildet ist, um ein Bild des mindestens einen Kratzers in dem Plattenelement (17) aufzunehmen.

7. Rakelvorrichtung (10) nach dem vorhergehenden Anspruch, wobei das Plattenelement (17) einen eloxierten Abschnitt aufweist, der von der Lasereinheit (20) geritzt werden soll.

8. Rakelvorrichtung (10) nach Anspruch 6 oder 7, ferner umfassend ein Verarbeitungselement (19), das konfiguriert ist, um das Bild des Kratzers in detektierte Leistungs- und/oder Fokuspositionsdaten der Lasereinheit (20) zu verarbeiten.

9. Rakelvorrichtung (10) nach einem der vorhergehenden Ansprüche, ferner umfassend ein Vergleichselement (21), das konfiguriert ist, um die erfassten Leistungs- und/oder Fokuspositionsdaten der Lasereinheit (20) und Referenzdaten zu vergleichen.

10. Rakelvorrichtung (10) nach einem der vorhergehenden Ansprüche, ferner umfassend ein Steuerelement (22), das konfiguriert ist, eine Leistung und/oder Fokusposition der Lasereinheit (20) basierend auf den erfassten Leistungs- und/oder Fokuspositionsdaten der Lasereinheit (20) und/oder dem Vergleich der erfassten Leistungs- und/oder Fokuspositionsdaten der Lasereinheit (20) und Referenzdaten zu steuern.

11. Rakelvorrichtung (10) nach dem vorhergehenden Anspruch, wobei das Steuerelement (22) dazu ausgebildet ist, eine kontinuierliche Steuerung während einer Fertigung eines Werkstücks vorzunehmen.

12. Ein additives Fertigungssystem (30) zum Aufbringen eines Pulvermaterials auf ein Substrat (1), umfassend eine Rakelvorrichtung (10) nach einem der vorhergehenden Ansprüche und eine Lasereinheit (20), wobei die Lasereinheit (20) konfiguriert ist, um das Pulvermaterial zu bestrahlen, das mittels eines Rakelelements (12) der Rakelvorrichtung (10) auf das Substrat (1) verteilt wird.

13. Verfahren zum Auftragen eines Pulvermaterials auf ein Substrat (1) mittels einer Rakel für ein additives Fertigungssystem, umfassend die folgenden Schritte:
- Aufbringen des Pulvermaterials auf das Substrat (1) mittels eines Rakelelements (12), das von einem Rakelkörper (11) gehalten wird und sich zumindest teilweise entlang des Rakelkörpers (11) erstreckt, wobei der Rakelkörper (11) und das Rakelelement (12) zwei oder mehr Komponenten umfassen, und
- Überwachen einer Wechselwirkung zwischen einer am Rakelkörper (11) angeordneten Messeinheit (13) und einer Lasereinheit (20), die zum Bestrahlen des auf das Substrat (1) aufgebrachten Pulvermaterials ausgebildet ist.

14. Verfahren nach dem vorhergehenden Anspruch, wobei die Messeinheit (13) ein Plattenelement (17) umfasst und der Überwachungsschritt zumindest ein Verkratzen des Plattenelements (17) mittels der Lasereinheit (20) und ein Erfassen eines Bildes des Kratzers in dem Plattenelement (17) umfasst.

15. Ein Herstellungsverfahren für eine Rakelvorrichtung (10) zum Aufbringen eines Pulvermaterials auf ein Substrat (1) für ein additives Fertigungssystem, umfassend:
- Bereitstellen eines Rakelkörpers (11) und eines Rakelelements (12), und
- Bereitstellen einer Messeinheit (13) an dem Rakelkörper (11),
wobei der Rakelkörper (11) das Rakelelement (12) hält, das Rakelelement (12) sich zumindest teilweise entlang des Rakelkörpers (11) erstreckt und der Rakelkörper (11) und das Rakelelement (12) zwei oder mehr Komponenten umfassen,
wobei das Rakelelement (12) ausgebildet ist, das Pulvermaterial auf das Substrat (1) aufzustreuen, und
wobei die Messeinheit (13) für eine Wechselwirkung mit einer Lasereinheit (20) ausgebildet ist, die ausgebildet ist, das auf das Substrat (1) aufgestreute Pulvermaterial zu bestrahlen.

## Revendications

1. Dispositif racloir (10) pour appliquer un matériau en poudre à un substrat (1) pour un système de fabrication additive, comprenant :
- un corps de racloir (11) ;
- un élément de racloir (12), et
- une unité de mesure (13),
dans lequel l'élément de racloir (12) est configuré pour étaler le matériau en poudre sur le substrat (1),
dans lequel le corps de racloir (11) maintient l'élément de racloir (12) et l'élément de racloir (12) s'étend au moins partiellement le long du corps de racloir (11),
dans lequel l'unité de mesure (13) est agencée au niveau du corps de racloir (11), et
dans lequel l'unité de mesure (13) est configurée pour une interaction avec une unité laser (20), qui est configurée pour irradier le matériau en poudre étalé sur le substrat (1),
**caractérisé en ce que** le corps de racloir (11) et l'élément de racloir (12) comprennent deux composants ou plus.

2. Dispositif racloir (10) selon la revendication 1, dans lequel l'unité de mesure (13) comprend un élément capteur (14) configuré pour détecter des données de puissance et/ou de position focale de l'unité laser (20).

3. Dispositif racloir (10) selon la revendication précédente, dans lequel l'élément capteur (14) comprend un seul capteur, qui est mobile par rapport au corps de racloir (11).

4. Dispositif racloir (10) selon la revendication 2, dans lequel l'élément capteur (14) comprend au moins deux capteurs, qui sont agencés espacés l'un de l'autre au niveau du corps de racloir (11).

5. Dispositif racloir (10) selon la revendication 1, dans lequel l'unité de mesure (13) comprend un élément réflecteur (15) configuré pour réfléchir une irritation de l'unité laser (20) vers un élément détecteur (16), dans lequel l'élément détecteur (16) est agencé à l'extérieur du corps de racloir (11) et est configuré pour détecter des donnés de puissance et/ou de position focale de l'unité laser (20).

6. Dispositif racloir (10) selon la revendication 1, dans lequel l'unité de mesure (13) comprend un élément plaque (17) configuré pour être éraflé par l'unité laser (20) au moins une fois et dans lequel le dispositif racloir (10) comprend en outre un élément caméra (18) configuré pour capturer une image de l'au moins une éraflure dans l'élément plaque (17).

7. Dispositif racloir (10) selon la revendication précédente, dans lequel l'élément plaque (17) comprend une partie anodisée à érafler par l'unité laser (20).

8. Dispositif racloir (10) selon la revendication 6 ou 7, comprenant en outre un élément de traitement (19) configuré pour traiter l'image de l'éraflure dans les données de puissance et/ou de position focale détectées de l'unité laser (20).

9. Dispositif racloir (10) selon l'une des revendications précédentes, comprenant en outre un élément de comparaison (21) configuré pour comparer les données de puissance et/ou de position focale détectées de l'unité laser (20) et des données de référence.

10. Dispositif racloir (10) selon l'une des revendications précédentes, comprenant en outre un élément de commande (22) configuré pour commander une puissance et/ou position focale de l'unité laser (20) sur la base des données de puissance et/ou de position focale détectées de l'unité laser (20) et/ou de la comparaison des données de puissance et/ou de position focale détectées de l'unité laser (20) et de données de référence.

11. Dispositif racloir (10) selon la revendication précédente, dans lequel l'élément de commande (22) est configuré pour une commande continue durant une fabrication d'une pièce.

12. Système de fabrication additive (30) pour appliquer un matériau en poudre à un substrat (1), comprenant un dispositif racloir (10) selon l'une des revendications précédentes et une unité laser (20), dans lequel l'unité laser (20) est configurée pour irradier le matériau en poudre, qui est étalé sur le substrat (1) à l'aide d'un élément de racloir (12) du dispositif racloir (10).

13. Procédé pour appliquer un matériau en poudre à un substrat (1) à l'aide d'un racloir pour un système de fabrication additive, comprenant les étapes suivantes consistant à :
- étaler le matériau en poudre sur le substrat (1) à l'aide d'un élément de racloir (12) maintenu par un corps de racloir (11) et s'étendant au moins partiellement le long du corps de racloir (11), dans lequel le corps de racloir (11) et l'élément de racloir (12) comprennent deux composants ou plus, et
- surveiller une interaction entre une unité de mesure (13) agencée au niveau du corps de racloir (11) et une unité laser (20) configurée pour irradier le matériau en poudre étalé sur le substrat (1).

14. Procédé selon la revendication précédente, dans lequel l'unité de mesure (13) comprend un élément plaque (17) et l'étape de surveillance comprend au moins une éraflure de l'élément plaque (17) à l'aide de l'unité laser (20) et une capture d'une image de l'éraflure dans l'élément plaque (17).

15. Procédé de fabrication pour un dispositif racloir (10) pour appliquer un matériau en poudre à un substrat (1) pour un système de fabrication additive, consistant à :
- fournir un corps de racloir (11) et un élément de racloir (12), et
- fournir une unité de mesure (13) au niveau du corps de racloir (11),
dans lequel le corps de racloir (11) maintient l'élément de racloir (12), l'élément de racloir (12) s'étend au moins partiellement le long du corps de racloir (11), et le corps de racloir (11) et l'élément de racloir (12) comprennent deux composants ou plus,
dans lequel l'élément de racloir (12) est configuré pour étaler le matériau en poudre sur le substrat (1), et
dans lequel l'unité de mesure (13) est configurée pour une interaction avec une unité laser (20), qui est configurée pour irradier le matériau en poudre étalé sur le substrat (1).
